# EUROPÄISCHE PATENTSCHRIFT

(11) **EP 0 663 428 B1**
(45) Veröffentlichungstag und Bekanntmachung des Hinweises auf die Patenterteilung: **05.08.1998**
(21) Anmeldenummer: 95100226.0
(22) Anmeldetag: 10.01.1995
(51) Int. Cl.: C09D 7/12, C09D 7/06

(54) **Beschichtungsverfahren und Überzugsmittel unter Verwendung von Polybutenen**
Coating process and coating composition using polybutenes
Procédé de revêtement et composition de revêtement utilisant des polybutènes

(30) Priorität: 14.01.1994 DE 4400854
(43) Veröffentlichungstag der Anmeldung: 19.07.1995
(73) Patentinhaber: Herberts Gesellschaft mit beschränkter Haftung, 42285 Wuppertal (DE)
(72) Erfinder: Kerkmann, Christiane, Seccion Sance No. 22, Mexico, CP 52172 (MX); Schlinsog, Hans-Jürgen, D-42489 Wuppertal (DE); Schönrock, Hans-Martin, D-42289 Wuppertal (DE)
(74) Vertreter: Türk, Gille, Hrabal, Leifert

(56) Entgegenhaltungen:
- EP-A- 0 034 841
- GB-A- 2 255 343
- DATABASE WPI Derwent Publications Ltd., London, GB; AN 82-44915E[22] & JP-A-57 067 663 (SUMITOMO CHEMICAL KK) 24. April 1982
- PATENT ABSTRACTS OF JAPAN vol. 11, no. 150 (C-422) 15. Mai 1987 & JP-A-61 285 268 (HONNY CHEM. IND. CO. LTD.) 16. Dezember 1986
- PATENT ABSTRACTS OF JAPAN vol. 017, no. 478 (C-1104) 31. August 1993 & JP-A-05 117 559 (ZEBURA KK) 14. Mai 1993
- DATABASE WPI Derwent Publications Ltd., London, GB; AN 83811016[45] & JP-A-58 164 789 (NITTO ELECTRIC IND. KK) 29. September 1983

## Beschreibung

Die Erfindung betrifft Beschichtungsverfahren unter Verwendung von Polybutenen (Poly-C4-Olefinen) als Additive, die eine Verbesserung der Verlaufsfähigkeit ergeben.

Die Lackierung dreidimensionaler Gegenstände mit komplexer Geometrie, wie z.B. Automobilkarossen, erfordert, daß die Applikation der einzelnen Lackschichten in einer bestimmten Schichtdicke erfolgt. Eine durch die Benetzungsgrenze vorgegebene Mindestschichtdicke ist dabei einzuhalten, wenn die Ausbildung eines geschlossenen Lackfilms über das gesamte Objekt gewährleistet sein soll. Diese Mindestschichtdicke wird in der Praxis überschritten, um eine optisch ansprechende Oberfläche mit gutem Verlauf und gutem Decklackstand zu erzielen. Nur so kann das notwendige Überschreiten der Benetzungsgrenze an von den Applikationsgeräten nur schlecht erreichbaren Stellen der dreidimensionalen Substrate, wie beispielsweise Sicken, Kanten oder Vertiefungen, sichergestellt werden. Dies führt nicht nur zu einem unerwünscht hohen Lackverbrauch, sondern je nach Natur des Überzugsmittels treten dabei oftmals auch Probleme mit der Ablaufsicherheit an senkrechten Flächen auf, wenn die Schichtdicke zu groß wird.

In der Automobilserienlackierung tritt dieser Problemkreis besonders in den Vordergrund bei der Herstellung der dekorativen Lackierung innerhalb einer Mehrschichtlackierung, das heißt bei der Applikation einer farb- und/oder effektgebenden Basislack- und einer schützenden Klarlackschicht. Das optische Erscheinungsbild der Oberfläche einer Automobilmehrschichtlackierung wird wesentlich durch den Verlauf und den Decklackstand des Klarlacks mitgeprägt, wobei gemeinhin gilt, daß mit steigender Klarlackschichtdicke eine Verbesserung dieser Eigenschaften erreicht wird.

Die JP-Patentveröffentlichung 58 16 46 57 beschreibt die Verwendung von Polybuten-Latexmaterialien, die Aluminiumpigmente, Fasern und hohle Füllstoffe enthalten, als Überzugsmittel zur Beschichtung von Dächern, die insbesondere eine gute Wärmeisolation ergeben.

In der JP-Patentveröffentlichung 2228374 werden Anstrichmittel beschrieben, die neben Filmbildnern Polybutene enthalten. Es handelt sich um Korrosionsschutzmittel für die Metall-Schwerindustrie. Die dort eingesetzten Polybutene haben hohe Molmassen von 500 bis 3000; sie werden in Kombination mit Metallseifen im Verhältnis 10:1 bis 10:3 eingesetzt.

Keine der Literaturstellen betrifft die Herstellung von Mehrschichtlackierungen. Es werden für die Automobillackierung ungeeignete Überzugsmittel beschrieben.

Aufgabe der Erfindung ist es, ein Beschichtungsverfahren unter Verwendung von Überzugsmitteln bereitzustellen, die eine möglichst niedrige Benetzungsgrenze besitzen und das bei Applikation in niedriger Schichtdicke die Herstellung von Überzügen mit optisch hervorragender Oberfläche erlaubt. Dabei sollen die Überzugsmittel in Schichtdicken appliziert werden können, die die Ablaufgrenze an senkrechten Flächen deutlich unterschreiten. Darüber hinaus sollen auch bei der Herstellung einer Zweischicht-naß-in-naß-Lackierung, insbesondere aus Basislack und Klarlack, die Benetzungsgrenzen des oder der zur Herstellung der Mehrschichtlackierung eingesetzten Überzugsmittel niedrige Werte annehmen. Insbesondere soll die Benetzungsgrenze des zur Herstellung einer äußeren Klarlackschicht verwendeten Klarlacks niedrig sein.

Es hat sich gezeigt, daß diese Aufgabe gelöst werden kann durch die Verwendung von einem oder mehreren Polybutenen (Poly-C4-Olefinen) als Additive in wäßrigen, lösemittelfreien oder lösemittelhaltigen Überzugsmitteln.

Einen Gegenstand der Erfindung bildet daher ein Verfahren zur Beschichtung von Substraten durch Zweischicht-naß-in-naß-Lackierung, das dadurch gekennzeichnet ist, daß man mindestens ein Überzugsmittel verwendet, dem man ein oder mehrere Polybutene (Poly-C4-Olefine) mit einer Molekularmasse von 200 bis unter 500, in einem Mengenanteil von 0,5 bis 10 Gew.-%, bezogen auf den Festkörpergehalt des Überzugsmittels, zusetzt.

Die erfindungsgemäß eingesetzten Überzugsmittel können beispielsweise auf ein oder mehreren filmbildenden Bindemitteln basieren und außerdem einen oder mehrere Vernetzer, organische Lösemittel, Wasser, Pigmente, Füllstoffe und/oder lackübliche Additive enthalten.

Bei den erfindungsgemäß als Additive verwendeten Poly-C4-Olefinen handelt es sich um Polymere auf der Basis von Butenen, insbesondere des 1-Butens und/oder des 2-Butens und/oder des Isobutens mit Molekularmassen von 200 bis unter 500, bevorzugt unter 350. Es handelt sich hierbei insbesondere um flüssige Produkte. d.h. um bei Raumtemperatur flüssige Produkte. Diese Produkte sind im Handel erhältlich, beispielsweise Napvis RD4 (von BP) und Indopol L14 (von Biesterfeld). Sie werden in einem Mengenanteil von 0,5 bis 10 Gew.-%, bezogen auf den Festkörpergehalt des Überzugsmittels, eingesetzt. Im Falle von farb- und/oder effektgebenden Lacken, z.B. Basislacken beträgt ihr Mengenanteil bevorzugt zwischen 1 und 5 Gew.-%, besonders bevorzugt unter 3 Gew.-%, bezogen auf den Festkörpergehalt im Lack; in Klarlacken liegt der Mengenanteil der Poly-C4-Olefine, bevorzugt zwischen 2 und 8 Gew.-%, besonders bevorzugt unter 5 Gew.-%, bezogen auf den Festkörpergehalt des Lackes.

Als Überzugsmittel beim erfindungsgemäßen Verfahren, in denen Poly-C4-Olefine als Additiv eingesetzt werden können, können alle üblichen Lacke, insbesondere spritzbaren Lacke, wie beispielsweise Füller, Basislacke, Decklacke und Klarlacke dienen. Bevorzugt wird das Poly-C4-Olefin in üblichen farb-und/oder effektgebenden Basislacken und/oder Klarlacken eingesetzt, die bei der Herstellung von Mehrschichtlackierungen Verwendung finden können. Es kann sich um ein- oder mehrkomponentige Überzugsmittel handeln. Sie können lösemittelfrei sein oder es kann sich um Systeme auf der Basis von Lösemitteln handeln oder es handelt sich um wasserverdünnbare Überzugsmittel, deren Bindemittelsysteme in geeigneter Weise, z.B. anionisch, kationisch oder nichtionisch, stabilisiert sind. Bei den wasserverdünnbaren Systemen kann es sich um wasserlöslische oder Emulsionssysteme handeln. Die Überzugsmittel können physikalisch trocknender Natur sein oder unter Ausbildung kovalenter Bindungen vernetzbar sein. Bei den unter Ausbildung kovalenter Bindungen vernetzenden Überzugsmitteln kann es sich um Lacksysteme handeln, die unter Einwirkung von Wärme, beispielsweise zwischen Raumtemperatur und 200°C und/oder durch Einwirkung energiereicher Strahlung, wie UV- oder Elektronenstrahlung, aushärten.

Bei den Überzugsmitteln handelt es sich um übliche Überzugsmittel, beispielsweise übliche Lacksysteme, die ein oder mehrere übliche Basisharze als filmbildende Bindemittel enthalten. Sie können, falls die Basisharze nicht selbstvernetzend oder selbsttrocknend sind, gegebenenfalls auch Vernetzer enthalten. Sowohl die Basisharzkomponente als auch die Vernetzerkomponente unterliegt keinerlei Beschränkung. Als filmbildende Bindemittel (Basisharze) können beispielsweise Polyester-, Polyurethan-und/oder Poly(meth)acrylatharze verwendet werden. In Basislacken kommen als Basisharze bevorzugt Bindemittelsysteme auf der Basis von Polyester-, Polyurethan- und/oder Poly(meth)acrylatharzen zum Einsatz, während in Klarlacken bevorzugt Polyester- und/oder Poly(meth)acrylharze als Basisharze eingesetzt werden. Die Auswahl der gegebenenfalls enthaltenen Vernetzer ist unkritisch, sie richtet sich nach der Funktionalität der Basisharze, das heißt die Vernetzer werden so ausgewählt, daß sie eine zur Funktionalität der Basisharze komplementäre, reaktive Funktionalität aufweisen. Beispiele für solche komplementäre Funktionalitäten zwischen Basisharz und Vernetzer sind: Carboxyl/Epoxid, Hydroxyl/Methylolether, Hydroxyl/freies Isocyanat, Hydroxyl/blockiertes Isocyanat, (Meht)acryloyl/CH-acide Gruppe. Sofern miteinander verträglich können auch mehrere solcher komplementären Funktionalitäten in einem Überzugsmittel nebeneinander vorliegen. Die gegebenenfalls in den Überzugsmitteln enthaltenen Vernetzer können einzeln oder im Gemisch vorliegen.

Beispiele für ein- und zweikomponentige nichtwäßrige Klarlacksysteme, denen das Poly-C4-Olefin erfindungsgemäß zugesetzt werden kann, findet man in den Veröffentlichungen DE-A-38 26 693, DE-A-40 17 075, DE-A-41 24 167, DE-A-41 33 704, DE-A-42 04 518, DE-A-42 04 611, EP-A-0 257 513, EP-A-0 408 858, EP-A-0 523 267, EO-A-0 557 822 und WO-92 11 327.

Ein Beispiel für ein bevorzugtes zweikomponentiges Klarlacksystem auf Lösemittelbasis, dem das Poly-C4-Olefin erfindungsgemäß zugesetzt werden kann, beschreibt die gleiche Anmelderin in der nach veröffentlichten DE-A-42 36 673. Dabei handelt es sich um Überzugsmittel, die Bindemittel auf der Basis eines oder mehrerer (Meth)acryl-Copolymerisate enthalten, die sich als Gemisch aus
A) 40 - 60 Gew.-% eines oder mehrerer hydroxylgruppenhaltiger (Meth)acryl-Copolymerisate, erhältlich durch Copolymerisation von
   a1) 50 - 70 Gew.-% eines oder mehrerer Acrylsäureester, die im Gemisch mit einem solchen Anteil eines oder mehrerer Acrylsäurehydroxyalkylester vorliegen, daß die Hydroxylzahl des Gemisches 40 - 70 mg KOH/g beträgt, und
   a2) 30 - 50 Gew.-% eines oder mehrerer Methacrylsäureester, die im Ge misch mit einem solchen Anteil eines oder mehrerer Methacrylsäurehydroxyalkylester vorliegen, daß die Hydroxylzahl des Gemisches 180 - 450 mg KOH/g beträgt und
B) 60 - 40 Gew.-% eines oder mehrerer hydroxylgruppenhaltiger (Meth)acryl-Copolymerisate, die erhältlich sind durch Copolymerisation von:
   b1) 27 - 40 Gew.-% eines oder mehrerer Acrylsäure-alkylester,
   b2) 49 - 55 Gew.-% eines oder mehrerer Methacrylsäureester, die im Gemisch mit einem solchen Anteil eines oder mehrerer Methacrylsäurehydroxyalkylester vorliegen, daß die Hydroxylzahl des Gemisches 240 - 300 mg KOH/g beträgt,
   b3) 1 - 3 Gew.-% Acrylsäure,
   b4) 10 - 15 Gew.-% eines oder mehrerer Vinylester aliphatischer gesättigter Monocarbonsäuren, bei denen die Carboxylgruppe an ein tertiäres Kohlenstoffatom gebunden ist,
wobei die Summe der Komponenten A) und B), die Summe der Komponenten a1) und a2) sowie die Summe der Komponenten b1) bis b4) jeweils 100 Gew.-% beträgt, zusammensetzen.

Diese speziellen Überzugsmittel enthalten neben den beiden vorstehend definierten (Meth)acryl-Copolymerisaten ein oder mehrere aliphatische und/oder cycloaliphatische Polyisocyanate, die auch im Gemisch vorliegen können, als Vernetzer. Die Überzugsmittel enthalten zudem ein oder mehrere organische Lösemittel, sowie lackübliche Additive, beispielsweise Lichtschutzmittel.

Die (Meth)acryl-Copolymerisate des vorstehend als Beispiel beschriebenen bevorzugten Klarlacksystems besitzen bevorzugt gewichtsmittlere Molekulargewichte (bestimmt durch Gelpermeationschromatographie unter Verwendung von Polystyrol als Eichsubstanz) zwischen 3000 und 5000 für Komponente A) und 5000 bis 8000 für Komponente B).

Die hydroxylgruppenhaltigen (Meth)acryl-Copolymerisate dieses Überzugsmittels liegen bevorzugt in einem Glasübergangstemperatur-Bereich von 10°C bis + 30°C für Komponente A) und + 20°C bis 50°C für Komponente B), berechnet aus der Glasübergangstemperatur der Homopolymerisate der einzelnen der in der Literatur angegebenen Monomere (FOX-Gleichung, s. z.B. Polymere Werkstoffe, Batzer, 1985, Seite 307).

Die Hydroxylzahl der gesamten Komponente A) liegt bevorzugt bei 120 bis 170 mg KOH/g. Die Hydroxylzahl der gesamten Komponente B) liegt bevorzugt bei 120 bis 160 mg KOH/g.

Zur Ausstattung des (Meth)acryl-Copolymerisats mit Carboxyl-Gruppen wird Acrylsäure bevorzugt in derartigen Mengen einpolymerisiert, daß für Komponente B) eine Säurezahl von 25 bis 50 mg KOH/g resultiert.

Beispiele für ein- oder zweikomponentige Wasserklarlacksysteme, denen Poly-C4-Olefin erfindungsgemäß zugesetzt werden kann, findet man in DE-A-39 10 829, DE-A-40 09 931, DE-A-40 09 932, DE-A-41 01 696, DE-A-41 32 430, DE-A-41 34 290, DE-A-42 03 510, EP-A-0 365 098, EP-A-0 365 775, EP-A-0 496 079 und EP-A-0 546 640.

Beispiele für Basislacksysteme auf Lösemittelbasis, denen Poly-C4-Olefin erfindungsgemäß zugesetzt werden kann, findet man in DE-A-37 15 254, DE-A-39 13 001, DE-A-41 15 948 und WO-91 00 895.

Beispiele für Wasserbasislacksysteme, denen Poly-C4-Olefin erfindungsgemäß zugesetzt werden kann, findet man in DE-A-29 26 584, DE-A-36 28 124, DE-A-38 41 540, DE-A-39 03 804, DE-A-39 15 459, DE-A-39 42 804, DE-A-40 01 841, DE-A-40 09 857, DE-A-40 09 858, DE-A-40 11 633, DE-A-41 07 136, DE-A-41 22 266, EP-A-0 089 497, EP-A-0 226 171, EP-A-0 287 144, EP-A-0 297 576, EP-A-0 353 797, EP-A-0 354 261, EP-A-0 401 565, EP-A-0 422 357, EP-A-0 512 524 und WO-92 17 546.

Beispiele für bevorzugte Wasserbasislacksysteme auf der Basis von wäßrigen Polyurethandispersionen, denen das Poly-C4-Olefin erfindungsgemäß zugesetzt werden kann, beschreibt die gleiche Anmelderin beispielsweise in den nach veröffentlichten DE-A- 42 24 617 und DE-A-42 28 510.

Bei den Polyurethandispersionen der DE-A-42 24 617 handelt es sich um selbstemulgierende Polyurethandispersionen, die bevorzugt, bezogen auf ihren Festkörper, im nicht neutralisierten Zustand eine Säurezahl von 5 bis 50, besonders bevorzugt über 10 und unter 30 haben. Das selbstemulgierende Polyurethanharz hat bevorzugt eine Glasübergangstemperatur, die unter der Dispergiertemperatur liegt. Die Dispersion kann z.B. so hergestellt werden, daß ein Urethanprepolymer hergestellt wird, indem man
- ein oder mehrere Polyisocyanate (a), bevorzugt Diisocyanate, mit einem Polyether- oder Polyesterdiol (b1) oder einer Mischung derselben, sowie gegebenenfalls eine oder mehrere niedermolekulare Polyhydroxylverbindungen (b2) und
- eine oder mehrere Dimethylolalkancarbonsäuren (c) in einem NCO/OH-Äquivalentverhältnis von 1,1 bis 2,0 : 1, bevorzugt 1,1 bis 1,9 : 1,
- in einer Ein- oder Mehrstufenreaktion in einem hydrophilen organischen, von aktivem Wasserstoff freien Lösemittel umsetzt. Anschließend erfolgt beispielsweise in der organischen Phase eine Kettenverlängerung mit Wasser, wobei pro NCO-Gruppe beispielsweise 0,5 bis 3 Mole Wasser eingesetzt werden. Das so erhaltene Polymere kann nach oder während seiner Neutralisation mit einem Amin in weiterem Wasser emulgiert und das organische Lösemittel, falls erforderlich, abdestilliert werden.

Bei den Polyurethandispersionen der DE-A-42 28 510 handelt es sich um wäßrige Polyurethanharzdispersionen, die erhältlich sind durch Kettenverlängerung von
- einem oder mehreren Polyurethanharzen, die mindestens eine CH-acide Gruppe im Molekül enthalten, durch Umsetzung in wäßrigem oder nicht-wäßrigem Medium, mit
- mindestens einer Verbindung, die mit mindestens zwei CH-aciden Gruppen reagieren kann und
- gegebenenfalls Überführen eines im nicht-wäßrigen Medium erhaltenen Reaktionsproduktes in die wäßrige Phase.

Bevorzugt werden die Dispersionen lösemittelfrei hergestellt. Bevorzugt enthalten die Bindemittel noch reaktive funktionelle Gruppen.

Das Polyurethanharz, das mindestens eine CH-acide Gruppe enthält, kann dabei auf verschiedene Weise hergestellt werden. Derartige CH-acide Polyurethanharze sind beispielsweise in der EP-A-0 367 051 beschrieben.

Ein weiterer Weg zur Herstellung einer Dispersion derartiger Polyurethanharze verläuft durch Umsetzung von einem Hydroxylgruppen enthaltenden Polyurethanharz mit mindestens einer ionischen Gruppe, das Harnstoffgruppierungen enthalten kann, in wasserfreiem Milieu, mit mindestens einer Verbindung, die mindestens eine zur Reaktion mit zumindest einem Teil der OH-Gruppen des Polyurethanharzes geeignete funktionelle Gruppe aufweist und darüber hinaus eine CH-acide Gruppe enthält und Überführen des erhaltenen Produkts nach Neutralisation in die wäßrige Phase.

Die Dispersionen werden vor oder nach der Überführung in die Wasserphase kettenverlängert mit einer Verbindung, die mit zwei CH-aciden Funktionen reagieren kann. Bevorzugt wird die Kettenverlängerung in der wäßrigen Dispersion durchgeführt.

Zur Kettenverlängerung geeignet sind Verbindungen, die mit CH-aciden Zentren reagieren können. Dabei muß mindestens eine zweifache Reaktionsmöglichkeit (also mit zwei CH-aciden Zentren) gegeben sein. Beispiele für solche Verbindungen sind Aldehyde oder Di- oder Polyisocyanate. Die geeigneten Kettenverlängerungsreagentien können einzeln oder in Kombination eingesetzt werden.

Bei der Herstellung von Zweischicht-naß-in-naß-Lackierungen aus Basislack und Klarlack kann das Poly-C4-Olefin erfindungsgemäß Bestandteil des farb-und/oder effektgebenden Basislacks und des Klarlacks sein oder es wird nur dem Basislack oder nur dem Klarlack zugesetzt. Bevorzugt wird es als Basislackadditiv, besonders bevorzugt in Wasserbasislacken, eingesetzt.

Lösemittelfreien und lösemittelhaltigen Überzugsmitteln kann das Poly-C4-Olefin im Prinzip in jedem Stadium ihrer Herstellung zugesetzt werden. Bei lösemittelhaltigen Systemen erfolgt der Zusatz bevorzugt vor der Einstellung der Applikationsviskosität durch Lösemittelzugabe. Bei zweikomponentigen Überzugsmitteln wird das Poly-C4-Olefin bevorzugt dem Stammlack zugesetzt, das heißt der Bindemittel enthaltenden Komponente vor dem Vermischen mit der Härterkomponente.

Die erfindungsgemäß verwendeten Überzugsmittel können lackübliche Lösemittel in üblichen Mengen entha ten. Beispiele für derartige Lösemittel sind organische Lösemittel, wie aliphatische und aromatische Kohlenwasserstoffe, beispielsweise Toluol, Xylole, Gemische aliphatischer und/oder aromatischer Kohlenwasserstoffe, sowie Ester, Ether und Alkohole.

Auch im Falle wäßriger Lacksysteme kann der Zusatz des Poly-C4-Olefins in jedem Stadium ihrer Herstellung erfolgen. Oftmals ist es zweckmäßig, das Poly-C4-Olefin vor der Zugabe wesentlicher Wassermengen zuzugeben, beispielsweise bei der Herstellung der wasserverdünnbaren Bindemittel noch vor deren Verdünnung mit Wasser.

Die Überzugsmittel können übliche Additive (z.B. Pigmente, Füllstoffe, Hilfs- und Zusatzstoffe) enthalten, wie sie auf dem Lacksektor geläufig sind. Die Mengen liegen, wie die Mengen der Bindemittel, Lösemittel und gegebenenfalls Vernetzer, sowie weiterer Zusätze, im üblichen, dem Fachmann geläufigen Bereich.

Beispiele für solche Additive sind Pigmente, beispielsweise farbgebende Pigmente, wie Titandioxid oder Ruß und Effektpigmente, wie Metallschuppenpigmente und/oder Perlglanzpigmente. Weitere Beispiele für Additive sind lackübliche Füllstoffe, wie z.B. Talkum und Silikate und Hilfs-Zusatzstoffe, wie Weichmacher, Lichtschutzmittel, Stabilisatoren und zusätzliche Verlaufsmittel, wie Silikonöle und Katalysatoren. Diese werden ebenfalls in üblichen, dem Fachmann geläufigen Mengen eingesetzt.

Die erfindungsgemäß verwendeten Überzugsmittel sind für Überzüge geeignet, die auf einer Vielzahl von Substraten haften. Beispiele für Substrate sind insbesondere Metalle, Holz, Textilien, Kunststoff, Glas, Keramik usw. Die Überzugsmittel sind jedoch insbesondere auf dem Kraftfahrzeugsektor geeignet.

Die erfindungsgemäß verwendeten Überzugsmittel können nach bekannten Verfahren, wie z.B. Spritzen, Tauchen, Rollen oder Rakeln appliziert werden. Bevorzugt ist der Spritzauftrag. Die Überzugsmittel werden auf das gegebenenfalls schon mit weiteren Lackschichten versehene Substrat aufgetragen.

Beim erfindungsgemäßen Verfahren gelingt es durch den Einsatz von Poly-C4-Olefinen in Überzugsmitteln des Standes der Technik, insbesondere in an sich bekannten farb- und/oder effektgebenden Basislacken und/oder Klarlacken gelingt es, deren Verlaufseigenschaften zu verbessern und ihre Benetzungsgrenzen abzusenken. Es ergeben sich Zweischicht lackierungen mit optisch hervorragender Oberfläche bezüglich Verlauf und Decklackstand des Klarlacks. Arbeitet man nach dem erfindungsgemäßen Verfahren, so kann bei niedrigerer Schichtdicke der Lackschichten, insbesondere des Klarlacks, ein gleichwertiges Lackierergebnis erreicht werden als beim Auftrag von Überzugsmitteln, die kein Poly-C4-Olefin enthalten, in üblichen höheren Schichtdicken. Dies dient einem geringeren Materialverbrauch und verbessert die Prozeßsicherheit. Die Gefahr des Ablaufens an senkrechten Flächen ist deutlich verringert. Ein geschlossener Lackfilm an von den Applikationsgeräten nur schlecht erreichbaren Stellen, wie Sicken, Kanten oder Vertiefungen, wird sicher erreicht.

### Beispiel 1 (Herstellung eines einkomponentigen Klarlacks auf Lösemittelbasis):

58,3 Gewichtsteile eines niedrigmolekularen hydroxyfunktionellen (Meth)acryl-Copolymerisats mit einem Styrol-Gehalt von 21 %, einer OH-Zahl von 80 mg KOH/g und einer Säurezahl von 20,5, einer Viskosität von 310 mPas/25°C, gelöst 60 %ig in Xylol wird mit 39,9 Gewichtsteilen eines Melaminharzes (SETAMINE US-138/70^{R}) vermischt, mit 27,0 Gewichtsteilen eines Lösemittelgemisches aus Solvesso 100 : n-Butanol = 4 : 1 auf eine Verarbeitungskonsistenz von 30 sek. AK4/20°C eingestellt (AK4 = Auslaufkonsistenz bei 4 mm - Düse).

### Beispiel 2:

Beispiel 1 wird wiederholt mit dem Unterschied, daß zusätzlich vor Einstellung der Verarbeitungsviskosität 2,5 Gewichtsteile eines handelsüblichen flüssigen Polybutens mit einem Molekulargewicht von 220 zugesetzt werden.

### Beispiel 3 (Herstellung eines einkomponentigen Klarlacks auf Lösemittelbasis):

Es wird ein Klarlack gemäß DE-A-41 33 704, Beispiel 3 hergestellt.

### Beispiel 4:

Beispiel 3 wird wiederholt mit dem Unterschied, daß 1,7 Gew.-Teile des Polybutens aus Beispiel 2 dem Bindemittelgemisch zugemischt werden, bevor die anderen Klarlackkomponenten hinzugegeben werden.

### Beispiel 5 (Herstellung eines zweikomponentigen Klarlacks auf Lösemittelbasis):

### Herstellung des Harzes 1,

In einen 2-Liter-Dreihals-Schliffkolben, der mit einem Rührer, Kontaktthermometer, Kugelkühler und Tropftrichter ausgerüstet ist, wird Pos. I (die Mengenangaben sind der Tabelle 1 zu entnehmen) vorgelegt und unter Rühren bei eingeschalteter Rückflußkühlung auf ca. 145°C geheizt. Innerhalb von 6 Stunden wird Pos. II (Monomergemisch + Initiator) kontinuierlich aus dem Tropftrichter heraus zudosiert. Nach Zulaufende wird der Tropftrichter mit Pos. III nachgespült und zum Reaktionsgut hinzugefügt. Anschließend wird der Ansatz 3 Stunden bei ca. 143°C nachpolymerisiert, so daß die Umsetzung > 99 % ist. Danach wird auf 100°C abgekühlt und mit Pos. IV auf einen Festkörper von ca. 65 % verdünnt.

### Herstellung des Harzes 2,

In einen 2 Liter-Dreihals-Schliffkolben, der mit einem Rührwerk, Kontaktthermometer, Kugelkühler und Tropftrichter ausgerüstet ist, wird Pos. I (die Mengenangaben sind der Tabelle 1 zu entnehmen) vorgelegt und unter Rühren bei eingeschalteter Rückflußkühlung auf ca. 139°C geheizt. Innerhalb von 5 Stunden wird Pos. II (Monomerengemisch + Initiator) kontinuierlich aus dem Tropftrichter heraus zudosiert. Nach Zulaufende wird der Tropftrichter mit Pos. III nachgespült und zum Reaktionsgut hinzugefügt. Anschließend wird der Ansatz 5 Stunden bei ca. 135°C nachpolymerisiert, so daß die Umsetzung > 99 % ist. Danach wird auf 100°C abgekühlt und mit Pos. IV auf einen Festkörper von ca. 50 % verdünnt.

**Tabelle 1**

| (Die Zahlenangaben beziehen sich auf das Gewicht in Gramm). | | | | |
|---|---|---|---|---|
| | Bestandteile | | | |
| Position: | | Harz | 1 | 2 |
| I | VEOVA 10 | | - | 60,0 |
| | Solvesso 100 | | 200,0 | 90,0 |
| | Butylacetat | | 100,0 | 56,0 |
| | Butanol | | - | 24,0 |
| | Methoxypropylacetat | | - | 60,0 |
| II | Tert.-butylacrylat | | 280,0 | 151,0 |
| | Butylmethacrylat | | 80,0 | 40,0 |
| | Isobutylmethacrylat | | - | 40,0 |
| | Hydroxypropylmethacrylat | | 200,0 | 178,0 |
| | Hydroxybutylacrylat | | 50,0 | - |
| | Acrylsäure | | - | 13,0 |
| | Tert.-Butylperoxybenzoat | | 20,0 | 18,0 |
| | Tert.-Butylperoxyoctoat | | 20,0 | - |
| III | Solvesso 100 | | - | 40,0 |
| | Butylacetat | | 30,0 | - |
| IV | Solvesso 100 | | - | 190,0 |
| | Butylacetat | | 20,0 | - |
| | Xylol | | - | 40,0 |
| | | | 1000,0 | 1000,0 |

| Kennzahlen: | | | | |
|---|---|---|---|---|
| Festkörper: | | | 65,7 | 50,4 |
| Viskosität (mPas b. 25°C): | | | 535 | 130 |
| Hydroxyl-Zahl (bez. a. Festharz): | | | 150 | 138 |
| Säurezahl (bez. a. Festharz): | | | 4,1 | 28,9 |
| Glasübergangstemperatur (°C): | | | 11 | 31 |

- VEOVA 10 =: Versaticsäurevinylester
- Solvesso 100 =: Lösemittel (Gemisch aromatischer Kohlenwasserstoffe mit einem Siedebereich von 162 - 180°C).
409 Teile der Harzlösung 2 und 323 Teile der Harzlösung 1 werden homogen gemischt und danach werden unter dem laufenden Rührer 21 Teile eines handelsüblichen Phthalats, 24 Teile eines Gemisches handelsüblicher Lichtschutzmittel (HALS- und Benztriazolderivat im Verhältnis 1 : 1), 23 Teile einer 1 %igen xylolischen Lösung handelsüblicher Silikonöle (Verlaufs- und Benetzungsmittel) und 180 Teile eines Lösemittelgemisches aus Butyldiglykolacetat, Ethoxypropylacetat, Butylglykolacetat und hochsiedenden aromatischen Kohlenwasserstoffen im Verhältnis 13 : 10 : 12 : 65 zugegeben.

In 100 Teile dieser Lösung werden 30 Teile einer 82 %igen Lösung eines aliphatischen Isocyanuratpolyisocyanats in Xylol/Butylacetat (1 : 1) homogen eingerührt. Man erhält einen Klarlack.

### Beispiel 6:

Beispiel 5 wird wiederholt mit dem Unterschied, daß vor Zugabe der Polyisocyanatlösung 2,9 Teile des Polybutens aus Beispiel 2 auf 100 Teile des Stammlacks zugesetzt werden.

### Beispiel 7 (Herstellung eines einkomponentigen Wasserklarlacks):

Es wird ein Wasserklarlack gemäß EP-A-0 496 079, Tabelle 3, Klarlackbeispiel 12 hergestellt.

### Beispiel 8:

Beispiel 7 wird wiederholt mit dem Unterschied, daß 1,6 Teile des Polybutens aus Beispiel 2 bei der Herstellung des Bindemittels vor Zugabe des Neutralisationsmittels und des Wassers zugesetzt werden.

### Beispiel 9 (Herstellung eines zweikomponentigen Wasserklarlacks):

### 1) Herstellung eines Polyesteroligomeren

336,7 g Trimethylolpropan, 366,8 g Adipinsäure und 197 g Hexandiol werden mit 5 g unterphosphriger Säure in einem mit Rührer, Abscheider, Thermometer und Rückflußkühler versehenen 2-Liter-Dreihalskolben bei 180 bis 230°C in der Schmelze auf eine Säurezahl von 20 verestert.

Anschließend wird unter Vakuum bis zu einer Säurezahl unter 1,5 kondensiert.

Das so erhaltene Produkt hat einen Einbrennrückstand von 94,5 % (1 h, 150°C), eine Viskosität von 3200 mPas (100 %ig), eine Hydroxylzahl von 460 und eine Farbzahl von 30 Hazen.

### 2) Herstellung eines Polyesteroligomer-Acrylatharzes

In einem 6-Liter-Vierhalskolben, der mit Rührer, Rückflußkühler, Tropftrichter und Thermometer versehen ist, werden

| | |
|---|---|
| 505,6 g | Butyldiglykol |
| 561,8 g | Polyesteroligomer aus 1) |
| 1421,4 g | Glycidylester der Versaticsäure (Handelsname der Shell AG "Cardura E10) |

vorgelegt und auf 144°C unter Rühren erhitzt. Anschließend wird ein Gemisch aus

| | |
|---|---|
| 196,7 g | Laurylacrylat |
| 196,7 g | Styrol |
| 393,3 g | Isobutylacrylat |
| 389,9 g | Butandiolmonoacrylat |
| 556,2 g | Acrylsäure |
| 612,4 g | Isobutylmethacrylat |
| 22,5 g | Di-tertiär-butylperoxid |
| 134,9 g | Tertiärbutylperoctoat |

in einem Zeitraum von 5 Stunden zudosiert. Dann wird bei ca. 144°C noch 2 Stunden nachpolymerisiert. Das Harz hat einen Festkörper von 88,3 % (1 h, 150°C), eine Säurezahl von 26 mg KOH/g und eine Viskosität von 7600 mPas.

### 3) Herstellung einer wäßrigen Polyesteroligomer-Acrylat-Emulsion

In einem 2-Liter-Dreihalskolben, der mit Rührer, Thermometer und Tropftrichter versehen ist, werden 634 g des unter 2) beschriebenen Polyesteroligomer-Acrylatharzes unter Rühren auf 40°C erhitzt. Anschließend wird durch Zugabe von 15,8 g Dimethylethanolamin neutralisiert. Danach werden 350,2 g vollentsalztes Wasser unter Rühren in 30 Minuten zudosiert. Die erhaltene Emulsion hat dann einen Festkörper von 55,1 % (1 h, 120°C).

### 4) Herstellung des 2K-Wasserklarlackes

82 T der unter 3) hergestellten Polyesteroligomer-Acrylat-Emulsion werden mit 18 T Solvesso 100 versetzt.

100 T dieser Mischung werden mit 35 T einer 80 %igen Lösung des Hexamethylendiisocyanat-Isocyanurates in Solvesso 100 vermischt.

### Beispiel 10:

Beispiel 9 wird wiederholt mit dem Unterschied, daß 3 Teile des Polybutens aus Beispiel 2 auf 82 Teile der Polyesteroligomer-Acrylat-Emulsion bei deren Herstellung zugesetzt werden (vor der Zugabe des Neutralisationsmittels).

### Beispiel 11 (Herstellung eines Basislacks auf Lösemittelbasis):

Es wird ein Metallic-Basislack gemäß DE-A-39 13 001, Beispiel 5 (Rezept IV) hergestellt.

### Beispiel 12:

Beispiel 11 wird wiederholt mit dem Unterschied, daß vor Einstellung der Applikationsviskosität 0,8 Teile des Polybutens aus Beispiel 2 zugesetzt werden.

### Beispiel 13 (Herstellung eines Wasserbasislacks):

a) Herstellung eines Bindemittels.
In einem Reaktionsgefäß mit Rührer, Innenthermometer, Heizung und Rückflußkühler werden 250 g eines linearen Polyesters (aufgebaut aus Adipinsäure, Isophthalsäure, Hexandiol, OH-Zahl 77, Säurezahl 10) mit 80 g Methylethylketon und 53,3 g N-Methylpyrrolidon auf 70°C erwärmt und bei dieser Temperatur 74 g hydriertes Bisphenol A sowie 28,3 g Dimethylolpropionsäure zugesetzt. Der Ansatz wird auf 120°C erwärmt und eine halbe Stunde bei dieser Temperatur gerührt. Anschließend werden bei 70°C 146,7 g Hexamethylendiisocyanat zugesetzt. Nach einer exothermen Phase (Temperatur <90°C) wird der Ansatz so lange bei 75°C gehalten, bis die Restisocyanatzahlwerte kleiner als 1,8 sind. Die warme Harzmischung wird mit der stöchiometrischen Menge entionisiertem Wasser und 23,5 g Triethylamin unter starkem Rühren umgesetzt, bis kein NCO mehr nachweisbar ist. Es wird mit so viel Wasser verdünnt, daß eine dünnflüssige Dispersion entsteht. Das Methylethylketon wurde im Vakuum abdestilliert.
Es resultierte eine durchscheinende wäßrige Dispersion mit folgenden Kenndaten:
- Feststoffgehalt:: 30 %
- Säurezahl :: 27 (mg KOH pro g Festharz)

b) Herstellung einer Polyurethandispersion Aus den nachfolgenden Materialien wird eine acetonische Lösung eines NCO-Prepolymeren hergestellt:

| | |
|---|---|
| 850 | Teile eines Polyesters aus Adipinsäure sowie Hexandiol und Neopentylglykol (Molverhältnis 65 : 35) mit einer Hydroxylzahl von 56 |
| | |
| 67,5 | Teile n-Butanol-gestarteter Polyether der OH-Zahl 26 unter Verwendung eines Gemisches aus 83 % Ethylenoxid und 17 % Propylenoxid |
| | |
| 40,2 | Teile Dimethylolpropionsäure |
| | |
| 151,2 | Teile Hexamethylendiisocyanat |
| | |
| 199,9 | Teile Isophorondiisocyanat |
| | |
| 23,4 | Teile Butandiol-1,4 |

Nach Erhalt von etwa 5 % NCO wird mit 150 % der stöchiometrischen Menge Wasser umgesetzt und gehalten, bis die NCO-Zahl nahezu 0 ist. Nach dem Neutralisieren mit 17,8 Teilen N,N-Dimethyldiethanolamin wird mit soviel Wasser verdünnt, daß die Dispersion fließfähig ist, und das Aceton wird unter Vakuum abdestilliert.
Die entstandene Dispersion enthält 35,2 % Festkörper; Säurezahl 13 mg KOH pro g Festharz.
c) Herstellung eines carboxyfunktionellen, epoxidgruppenhaltigen Polymeren
In eine Lösung von 127 g eines Polyesters (OHZ = 107) in 70 g Methylethylketon wurden 100 g Anhydrid-Gemisch (SZ/H₂O = 560), hergestellt durch Umsetzung von Trimellitsäureanhydrid mit Propandiol-1,2, die in 30 g Aceton bei 50°C homogenisiert waren, innerhalb einer Stunde zugetropft. Bei 90°C wurde so lange gerührt, bis das Reaktionsgemisch eine Säurezahl in Wasser von 197 (bezogen auf 100 %iges Harz) erreicht hatte. Danach wurden noch 15 g Wasser zugemischt. Nach 6-stündigem Rühren bei 80 bis 90°C betrug die Säurezahl in Butanol 180 (100 %iges Harz). Die Gemischtemperatur wurde auf 60°C gesenkt und 133 T eines epoxidierten Leinöls (Epoxyzahl = 8,9) innerhalb von 2 Stunden zugetropft. Die Mischung wurde so lange gerührt, bis die Säurezahl in Butanol auf 90 abgesunken war. Danach wurde eine Mischung von 56 g Dimethylaminethanol in 540 g Wasser eingerührt. Es wurde eine hellgelbe, opaleszierende Lösung erhalten, aus der bei 0,1 bar und 40°C das organische Lösungsmittel abdestilliert wurde. Nach Filtration wurde eine gelbliche, praktisch klare wäßrige Harzlösung erhalten. Festkörpergehalt (1 h bei 125°C) ca. 39 %.
d) Herstellung einer Bindemittellösung

| | |
|---|---|
| 50,00 g | des vorstehend unter c) beschriebenen wasserverdünnbaren Bindemittels werden mit |
| 43,94 g | vollentsalztem Wasser und |
| 6,00 g | Butoxyethanol vermischt und mit |
| 0,06 g | N-Dimethylaminoethanol auf einen pH-Wert von 6,2 - 6,4 eingestellt. |

e) Herstellung einer Aluminiumanteigung

| | |
|---|---|
| 20,50 g | einer handelsüblichen Aluminiumpaste mit einem Metallgehalt von 65 % werden mit einer Mischung aus |
| 7,00 g | Butoxyethanol und |
| 14,00 g | vollentsalztem Wasser gut verrührt und anschließend mit einer Mischung aus |
| 4,00 g | des vorstehend unter c) und zusätzlich |
| 6,00 g | des unter a) beschriebenen Bindemittels, |
| 10,00 g | Butoxyethanol, |
| 34,70 g | vollentsalztem Wasser und |
| 3,00 g | eines handelsüblichen sauren Acrylatverdickers versetzt. Mit einer Mischung aus |
| 0,08 g | N-Dimethylaminoethanol und |
| 0,72 g | vollentsalztem Wasser auf auf einen pH-Wert von 6,2 - 6,4 eingestellt. |

f) Herstellung eines wasserverdünnbaren silberfarbenen Metallicbasislackes
Es wird ein silberfarbener Basislack hergestellt aus

| | |
|---|---|
| 40,00 g | der unter d) beschriebenen Bindemittellösung, |
| 19.00 g | der unter e) beschriebenen Aluminiumanteigung, |
| 1,90 g | saurem Acrylatverdicker, |
| 0,26 g | N-Dimethylaminoethanol, |
| 25,00 g | Polyurethandispersion (gemäß b)) |
| 4,00 g | n-Butanol und |
| 9,84 g | vollentsalztem Wasser. |

Der Festkörpergehalt beträgt 18,0 Gew.-% (120 Minuten im Umlufttrockenofen bei 120°C). Die Viskosität liegt bei 90 - 95 mPa.s bei einem Schergefälle von 100 sec.⁻¹.

### Beispiel 14:

Beispiel 13 wird wiederholt mit dem Unterschied, daß 0,5 g des Polybutens in den Wasserbasislack eingerührt werden.

Alle Lacke, denen das Polybuten aus Beispiel 2 zugesetzt wurde, sind stabil.

### Herstellung von Mehrschichtlackierungen:

Mit in der Automobilserienlackierung verwendetem handelsüblichen kathodisch abscheidbarem Elektrotauchlack (KTL) (18 µm) und handelsüblichem Füller (35 µm) vorbeschichtete Karosseriebleche (30 • 60 cm) werden in 15 µm Trockenschichtdicke mit den Basislacken gemäß Tabelle 2 durch Druckluftspritzen lackiert und vorgetrocknet. Direkt anschließend wer den mit den Klarlacken gemäß Tabelle 2 keilförmige Klarlackschichten in einer maximalen Trockenschichtdicke von 50 µm durch Spritzauftrag naß-in-naß überlackiert (Keil in Längsrichtung des Prüfblechs). Nach 5 min. Ablüften bei Raumtemperatur wird jeweils 20 min. bei 140°C eingebrannt.

Die unter Verwendung der Lacke 12, 14 und/oder 2, 4, 6, 8, 10 hergestellten Mehrschichtlackierungen zeichnen sich durch einen verbesserten Verlauf der Klarlackdeckschicht aus im Vergleich zu entsprechend hergestellten Mehrschichtlackierungen aus den Lackkombinationen 11, 13 mit 1, 3, 5, 7, 9.

Tabelle 1 gibt die visuell wahrnehmbaren Benetzungsgrenzen (in µm) des Klarlacks in den Mehrschichtlackierungen (erfindungsgemäße und Vergleichsbeispiele) an. Die erfindungsgemäßen Beispiele sind durch Unterstreichung gekennzeichnet.

**Tabelle 2**

| Basislack-Beispiel (Trocknungsbedingungen) | | | | |
|---|---|---|---|---|
| Klarlackbeispiel | 11 | 12 | 13 | 14 |
| | (10 min. Raumtemperatur) | | (5 min. 80°C) | |
| 1 | 12 | **10** | 15 | **12** |
| 5 | 15 | **12** | 20 | **15** |
| 6 | ./. | ./. | **15** | ./. |
| 7 | ./. | ./. | 23 | ./. |
| 8 | ./. | ./. | **17** | ./. |

## Patentansprüche

1. Verfahren zur Beschichtung von Substraten durch Zweischicht-naß-in-naß-Lackieren, dadurch gekennzeichnet, daß man mindestens ein Überzugsmittel verwendet, dem man ein oder mehrere Polybutene (Poly-C4-Olefine) mit einer Molekularmasse von 200 bis unter 500, in einem Mengenanteil von 0,5 bis 10 Gew.-%, bezogen auf den Festkörpergehalt des Überzugsmittels zusetzt.

2. Verfahren nach Anspruch 1, worin das Überzugsmittel ein Überzugsmittel auf der Basis von einem oder mehreren filmbildenden Bindemitteln ist, das außerdem einen oder mehrere Vernetzer, organische Lösemittel, Wasser, Pigmente, Füllstoffe und/oder lackübliche Additive enthalten kann.

3. Verfahren nach Anspruch 1 oder 2, worin das Überzugsmittel ein oder mehrere Bindemittel auf der Basis eines oder mehrerer (Meth)acryl-Copolymerisate enthält, die ein Gemisch aus
A) 40 - 60 Gew.-% eines oder mehrerer hydroxylgruppenhaltiger (Meth)acryl-Copolymerisate, erhältlich durch Copolymerisation von
a1) 50 - 70 Gew.-% eines oder mehrerer Acrylsäureester, die im Gemisch mit einem solchen Anteil eines oder mehrerer Acrylsäurehydroxyalkylester vorliegen, daß die Hydroxylzahl des Gemisches 40 - 70 mg KOH/g beträgt, und
a2) 30 - 50 Gew.-% eines oder mehrerer Methacrylsäureester, die im Gemisch mit einem solchen Anteil eines oder mehrerer Methacrylsäurehydroxyalkylester vorliegen, daß die Hydroxylzahl des Gemisches 180 - 450 mg KOH/g beträgt und
B) 60 - 40 Gew.-% eines oder mehrerer hydroxylgruppenhaltiger (Meth)acryl-Copolymerisate, die erhältlich sind durch Copolymerisation von:
b1) 27 - 40 Gew.-% eines oder mehrerer Acrylsäure-alkylester,
b2) 49 - 55 Gew.-% eines oder mehrerer Methacrylsäureester, die im Gemisch mit einem solchen Anteil eines oder mehrerer Methacrylsäurehydroxyalkylester vorliegen, daB die Hydroxylzahl des Gemisches 240 - 300 mg KOH/g beträgt,
b3) 1 - 3 Gew.-% Acrylsäure,
b4) 10 - 15 Gew.-% eines oder mehrerer Vinylester aliphatischer gesättigter Monocarbonsäuren, bei denen die Carboxylgruppe an ein tertiäres Kohlenstoffatom gebunden ist,
enthalten, wobei die Summe der Komponenten A) und B), die Summe der Komponenten a1) und a2) sowie die Summe der Komponenten b1) bis b4) jeweils 100 Gew.-% beträgt,
und als Vernetzer ein oder mehrere aliphatische und/oder cycloaliphatische Polyisocyanate enthält.

4. Verfahren nach Anspruch 3, worin das Überzugsmittel frei von Pigmenten und Füllstoffen als Klarlack formuliert ist.

5. Verfahren nach Anspruch 1 oder 2, worin das Überzugsmittel als Bindemittel eine wäßrige Dispersion eines oder mehrerer Polyurethanharze enthält, die erhältlich ist durch Herstellung eines Urethanprepolymeren, indem man
- ein oder mehrere Polyisocyanate mit einem Polyether- oder Polyesterdiol oder einer Mischung derselben, sowie gegebenenfalls eine oder mehrere niedermolekulare Polyhydroxylverbindungen und
- eine oder mehrere Dimethylolalkancarbonsäuren in einem NCO/OH-Äquivalentverhältnis von 1,1 bis 2,0 : 1,
- in einer Ein- oder Mehrstufenreaktion in einem hydrophilen organischen, von aktivem Wasserstoff freien Lösemittel umsetzt, und anschließend eine Kettenverlängerung mit Wasser durchführt.

6. Verfahren nach Anspruch 1 oder 2, worin das Überzugsmittel als Bindemittel eine wäßrige Dispersion eines oder mehrerer Polyurethanharze enthält, die erhältlich ist durch Kettenverlängerung von
- einem oder mehreren Polyurethanharzen, die mindestens eine CH-acide Gruppe im Molekül enthalten, durch Umsetzung in wäßrigem oder nicht-wäßrigem Medium, mit
- mindestens einer Verbindung, die mit mindestens zwei CH-aciden Gruppen reagieren kann und
- gegebenenfalls Überführen eines im nicht-wäßrigen Medium erhaltenen Reaktionsproduktes in die wäßrige Phase.

7. Verfahren nach Anspruch 1 zur Mehrschichtlackierung von Substraten, die bereits eine oder mehrere Überzugsschichten aufweisen können, durch Auftrag einer Basislackschicht und einer Klarlackschicht, dadurch gekennzeichnet, daß zur Herstellung der Basislackschicht ein Überzugsmittel nach einem der Ansprüche 5 oder 6 aufgetragen wird.

8. Verfahren nach Anspruch 1 zur Mehrschichtlackierung von Substraten, die bereits eine oder mehrere Überzugsschichten aufweisen können, durch Auftrag einer Basislackschicht und einer Klarlackschicht, dadurch gekennzeichnet, daß zur Herstellung der Klarlackschicht ein Überzugsmittel nach Anspruch 4 aufgetragen wird.

9. Verfahren nach Anspruch 1 zur Mehrschichtlackierung von Substraten, die bereits eine oder mehrere Überzugsschichten aufweisen können, durch Auftrag einer Basislackschicht und einer Klarlackschicht, dadurch gekennzeichnet, daß zur Herstellung der Basislackschicht ein Überzugsmittel nach Anspruch 5 oder 6 und zur Herstellung der Klarlackschicht, ein Überzugsmittel nach Anspruch 4 aufgetragen wird.

10. Verfahren nach einem der Ansprüche 7 bis 9, dadurch gekennzeichnet, daß Kraftfahrzeuge oder deren Teile lackiert werden.

## Claims

1. A process for coating substrates by two-layer wet-into-wet lacquer coating, characterised in that at least one coating medium is used, to which one or more polybutenes (poly-C4-olefines) with a molecular weight from 200 to less than 500 are added in a quantitative proportion of 0.5 to 10 % by weight with respect to the solids content of the coating medium.

2. A process according to claim 1, wherein the coating medium is a coating medium based on one or more film-forming binder vehicles, which may additionally contain one or more crosslinking agents, organic solvents, water, pigments, extenders and/or customary lacquer additives.

3. A process according to claim 1 or 2, wherein the coating medium contains one or more binder vehicles based on one or more (meth)acrylic copolymers, which contain a mixture of
A) 40 - 60 % by weight of one or more (meth)acrylic copolymers containing hydroxyl groups, which are obtainable by the copolymerisation of
a1) 50 - 70 % by weight of one or more acrylic acid esters, which are present in admixture with a proportion of one or more acrylic acid hydroxyalkyl esters such that the hydroxyl number of the mixture is 40 - 70 mg KOH/g, and
a2) 30 - 50 % by weight of one or more methacrylic acid esters which are present in admixture with a proportion of one or more methacrylic acid hydroxyalkyl esters such that the hydroxyl number of the mixture is 180 - 450 mg KOH/g, and
B) 60 - 40 % by weight one or more (meth)acrylic copolymers which contain hydroxyl groups, and which are obtainable by the copolymerisation of:
b1) 27 - 40 % by weight of one or more acrylic acid alkyl esters.
b2) 49 - 55 % by weight of one or more methacrylic acid esters which are present in admixture with a proportion of one or more methacrylic acid hydroxyalkyl esters such that the hydroxyl number of the mixture is 240 - 300 mg KOH/g,
b3) 1 - 3 % by weight of acrylic acid,
b4) 10 - 15 % by weight of one or more vinyl esters of aliphatic saturated monocarboxylic acids in which the carboxyl group is bonded to a tertiary carbon atom,
wherein the sum of components A) and B), the sum of components a1) and a2) and the sum of components b1) to b4) is 100 % by weight in each case, and the coating medium contains one or more aliphatic and/or cycloaliphatic polyisocyanates as crosslinking agents.

4. A process according to claim 3, wherein the coating medium is formulated, free from pigments and extenders, as a clear lacquer.

5. A process according to claim 1 or 2, wherein the coating medium contains, as a binder vehicle, an aqueous dispersion of one or more polyurethane resins which is obtainable by producing a urethane prepolymer, by the reaction of
- one or more polyisocyanates with a polyether- or polyester diol or with a mixture of the same, and optionally with one or more low molecular weight polyhydroxyl compounds, and
- one or more dimethylolalkane-carboxylic acids, in an NCO/OH equivalent ratio of 1.1 to 2.0 : 1,
- in a single or multi-step reaction in a hydrophilic organic solvent which is free from active hydrogen, and a chain extension with water is subsequently carried out.

6. A process according to claim 1 or 2, wherein the coating medium contains, as a binder vehicle, an aqueous dispersion of one or more polyurethane resins which is obtainable by the chain extension of
- one or more polyurethane resins which contain at least one acidic CH group in their molecule, by reaction in aqueous or nonaqueous medium with
- at least one compound which is capable of reacting with at least two acidic CH groups, and
- optionally converting a reaction product which is contained in the nonaqueous medium into the aqueous phase.

7. A process according to claim 1 for the multi-layer coating of substrates, which may already comprise one or more coating layers, by the application of a base lacquer coat and of a clear lacquer coat, characterised in that a coating medium according to either one of claims 5 or 6 is applied for the production of the base lacquer coat.

8. A process according to claim 1 for the multi-layer coating of substrates, which may already comprise one or more coating layers. by the application of a base lacquer coat and of a clear lacquer coat, characterised in that a coating medium according to claim 4 is applied for the production of the clear lacquer coat.

9. A process according to claim 1 for the multi-layer coating of substrates, which may already comprise one or more coating layers, by the application of a base lacquer coat and of a clear lacquer coat, characterised in that a coating medium according to claim 5 or 6 is applied for the production of the base lacquer coat, and a coating medium according to claim 4 is applied for the production of the clear lacquer coat.

10. A process according to any one of claims 7 to 9, characterised in that motor vehicles or parts thereof are coated.

## Revendications

1. Procédé pour l'application de revêtements à deux couches au mouillé-sur-mouillé sur des supports, caractérisé en ce que l'on utilise au moins un produit de revêtement auquel on a ajouté un ou plusieurs polybutènes (polyoléfines en C4) de poids moléculaire 200 mais inférieur à 500, en quantité de 0,5 à 10 % en poids des matières solides du produit de revêtement.

2. Procédé selon revendication 1, dans lequel le produit de revêtement est à base d'un ou plusieurs liants filmogènes et peut contenir en outre un ou plusieurs agents réticulants, des solvants organiques, de l'eau, des pigments, des matières de charge et/ou des additifs usuels pour peintures et vernis.

3. Procédé selon revendication 1 ou 2, dans lequel le produit de revêtement contient un ou plusieurs liants à base d'un ou plusieurs copolymères (méth)acryliques, qui contiennent un mélange de
A) 40 à 60 % en poids d'un ou plusieurs copolymères (méth)acryliques à groupes hydroxy, obtenu par copolymérisation de
a1) 50 à 70 % en poids d'un ou plusieurs esters acryliques, en mélange avec un ou plusieurs acrylates d'hydroxyalkyle, ces derniers en quantités telles que l'indice d'hydroxyle du mélange aille de 40 à 70 mg de KOH/g et
a2) 30 à 50 % en poids d'un ou plusieurs esters méthacryliques, en mélange avec un ou plusieurs méthacrylates d'hydroxyalkyle, ces derniers en quantités telles que l'indice d'hydroxyle du mélange aille de 180 à 450 mg de KOH/g et
B) 60 à 40 % en poids d'un ou plusieurs copolymères (méth)acryliques à groupes hydroxy, obtenus par copolymérisation de
b1) 27 à 40 % en poids d'un ou plusieurs acrylates d'alkyle,
b2) 49 à 55 % en poids d'un ou plusieurs esters méthacryliques, en mélange avec un ou plusieurs méthacrylates d'hydroxyalkyle, ces derniers en quantités telles que l'indice d'hydroxyle du mélange aille de 240 à 300 mg de KOH/g,
b3) 1 à 3 % en poids d'acide acrylique,
b4) 10 à 15 % en poids d'un ou plusieurs esters vinyliques d'acides monocarboxyliques aliphatiques saturés dans lesquels le groupe carboxyle est fixé sur un atome de carbone tertiaire,
avec un total de 100 % en poids pour la somme des composants A) et B), la somme des composants a1) et a2) et la somme des composants b1) à b4),
et en tant qu'agents réticulants un ou plusieurs polyisocyanates aliphatiques et/ou cycloaliphatiques.

4. Procédé selon revendication 3, dans lequel le produit de revêtement ne contient pas de pigment ni de matière de charge, et consiste en un vernis clair.

5. Procédé selon revendication 1 ou 2, dans lequel le produit de revêtement contient en tant que liant une dispersion aqueuse d'une ou plusieurs résines de polyuréthannes obtenues en préparant un prépolymère d'uréthanne par réaction de
- un ou plusieurs polyisocyanates avec un polyéther- ou polyester-diol ou un mélange de tels composants, et le cas échéant un ou plusieurs composés polyhydroxylés à bas poids moléculaire et
- un ou plusieurs acides diméthylolalcanoïques, avec un rapport de 1,1 à 2,0:1 entre les équivalents de NCO et les équivalents d'OH,
- dans une réaction en un ou en plusieurs stades opératoires, dans un solvant organique hydrophile mais exempt d'hydrogène actif,
puis en soumettant à allongement des chaînes par l'eau.

6. Procédé selon revendication 1 ou 2, dans lequel le produit de revêtement contient en tant que liant une dispersion aqueuse d'une ou plusieurs résines de polyuréthannes, obtenues par allongement des chaînes de
- une ou plusieurs résines de polyuréthannes contenant au moins un groupe à CH acide dans la molécule, par réaction d'un milieu aqueux ou non aqueux avec
- au moins un composé capable de réagir avec au moins deux groupes à CH acide,
- et le cas échéant transfert dans la phase aqueuse d'un produit de réaction obtenu en milieu non aqueux,

7. Procédé selon revendication 1, pour l'application de revêtements à plusieurs couches sur des supports qui peuvent déjà porter une ou plusieurs couches de revêtement, par application d'une couche de peinture de base et d'une couche de vernis clair, caractérisé en ce que, pour l'application de la couche de peinture de base, on applique un produit de revêtement selon l'une des revendications 5 ou 6.

8. Procédé selon revendication 1, pour l'application de revêtements à plusieurs couches sur des supports qui peuvent déjà porter une ou plusieurs couches de revêtement par application d'une couche de peinture de base et d'une couche de vernis clair caractérisé en ce que pour l'application de la couche de vernis clair, on applique un produit de revêtement selon revendication 4.

9. Procédé selon la revendication 1 pour l'application de revêtement à plusieurs couches sur des supports qui peuvent déjà porter une plusieurs couches de revêtement par application d'une couche de peinture de base et d'une couche de vernis clair, caractérisé en ce que, pour l'application de la couche de peinture de base, on utilise un produit de revêtement selon revendication 5 ou 6, et pour l'application de vernis clair, on applique un produit de revêtement selon revendication 4.

10. Procédé selon une des revendications 7 à 9, caractérisé en ce que l'on applique des revêtements sur des véhicules ou des parties de véhicules.
